# EUROPÄISCHE PATENTSCHRIFT

(11) **EP 0 316 471 B1**
(45) Veröffentlichungstag und Bekanntmachung des Hinweises auf die Patenterteilung: **28.07.1993**
(21) Anmeldenummer: 87116977.7
(22) Anmeldetag: 17.11.1987
(51) Int. Cl.: G01S 13/86, G01S 13/60, G01C 21/16

(54) **Verfahren zur Erhöhung der Fehlererkennung bei der Geschwindigkeitsmessung von Fluggeräten mittels Doppler-Radar**
Method for increasing error detection at the speed measurement of aircraft by means of a Doppler radar
Procédé pour la modification de la détection d'erreurs de mesure de vitesse d'aéronef effectuée au moyen du radar Doppler

(43) Veröffentlichungstag der Anmeldung: 24.05.1989
(73) Patentinhaber: LITEF GmbH, 79115 Freiburg (DE)
(72) Erfinder: Hassenpflug, Wolfgang, D-7800 Freiburg i. Br. (DE)
(74) Vertreter: TER MEER STEINMEISTER & PARTNER GbR

(56) Entgegenhaltungen:
- DE-A- 1 940 620
- FR-A- 2 137 306
- US-A- 3 242 736
- US-A- 4 070 674
- US-A- 4 175 285
- US-A- 4 431 994
- IEEE TRANSACTIONS ON AEROSPACE AND ELECTRONIC SYSTEMS, Band AES-5, Nr. 5, September 1969, Seiten 737-747, New York, US; W. ZIMMERMAN: "Optimum integration of aircraft navigation systems"

## Beschreibung

Die Erfindung betrifft ein Verfahren zur Erkennung von Fehlern bei der Geschwindigkeitsmessung mittels Doppler-Radar bei Fluggeräten, die mit einem inertialen Lagereferenzsystem und Flugregelsystem sowie mit einem barometrischen Höhenmesser ausgerüstet sind, bei welchem Verfahren durch ein Antennensystem am Fluggerät eine Mehrzahl, jedoch mindestens drei gebündelte Radarstrahlen in festgelegten Raumwinkeln gegen die Erdoberfläche gerichtet und aus der um Doppler-Frequenzen verschobenen gemessenen Energierückstreuung der einzelnen Hauptstrahlungskeulen der Mehrzahl von Radarstrahlen durch Summenbildung der skalierten Doppler-Frequenzwerte die Geschwindigkeitskomponenten in drei Raumrichtungen bestimmt werden, von denen eine die Vertikalgeschwindigkeit ist.

Doppler-Radargeräte werden in Starr- und Drehflüglern eingesetzt, um die Geschwindigkeit über Grund zu bestimmen.

Das Doppler-Radar arbeitet beispielsweise bei 13,3 GHz. Es gibt Ausführungen, bei denen die Radarenergie durch ein Antennensystem am Fluggerät mit drei oder vier hinsichtlich der Abstrahlwinkel genau festgelegten Strahlungskeulen abgestrahlt wird. Außerdem werden im vorliegenden Zusammenhang nicht weiter interessierende Modulationstechniken angewendet. Gemeinsam ist jedoch, daß die Antennen so gebaut sind, daß eventuell vorhandene Nebenzipfel in dem von den drei bzw. vier Hauptstrahlungskeulen umschlossenen Raum liegen. Dieses Prinzip funktioniert gut, solange von der unter den festgelegten Winkeln abgestrahlten Hochfrequenzenergie ein ausreichender, um die Doppler-Frequenz verschobener Anteil zurückgestreut wird.

Es sind jedoch Oberflächenbedingungen bekannt, beispielsweise wenig bewegte Wasseroberflächen, Wüsten- oder "Waschbrettgelände", bei denen die Rückstreuung unter den gewünschten und geeichten Abstrahlwinkeln nicht mehr ausreicht.

Da es keine von Nebenzipfelabstrahlung freie Antenne gibt und die in den Nebenzipfeln abgestrahlte Energie insbesondere bei den genannten Geländebedingungen zu einer höheren Energierückstreuung führen kann, tritt der Fall ein, daß unter den genannten Bedingungen der Radarempfänger auf die falsche Abstrahlrichtung aufgeschaltet und dementsprechend eine falsche Geschwindigkeit gemessen wird.

Da das Problem an sich bekannt ist, wird bisher zur Erkennung dieses Zustands vorzeichenrichtig die Summe aus den Werten der drei bzw. vier gemessenen und skalierten Doppler-Frequenzen gebildet. Der Summenwert muß bei richtiger Arbeitsweise klein sein und springt auf einen großen Wert, wenn sich eine Abstrahlrichtung ändert bzw. auf eine falsche Abstrahlrichtung, also insbesondere auf einen Nebenzipfel aufgeschaltet wird. Ändern sich jedoch zwei korrespondierende Abstrahlrichtungen innerhalb der für die Summenbildung relevanten Zeit, die insbesondere vom Modulationsverfahren abhängig ist, so versagt dieses in der Fachwelt als "Beam Sum Check" bekannte Prüfverfahren.

Zur Erhöhung der Entdeckungswahrscheinlichkeit des Aufschaltens des Radarempfängers auf einen unerwünschten Nebenzipfel sind auch schon "Hardware"-Maßnahmen ergriffen worden, insbesondere bei der Antennenkonstruktion im Hinblick auf eine geringe Energieabstrahlung durch Nebenzipfel. Die Nebenzipfeldämpfung ist ersichtlicherweise ein Maß für die Wahrscheinlichkeit des fehlerhaften Aufschaltens auf einen Nebenzipfel, wenn das Signal/Rausch-Verhältnis für eine der Hauptstrahlungskeulen zu klein wird.

Die unvollständige Erkennung des Aufschaltens auf unerwünschte Nebenzipfel mit der Folge falsch gemessener Geschwindigkeiten führt bei reinen Doppler-Navigationssystemen lediglich zu einer Verschlechterung der Navigationsgenauigkeit, die zwar unbefriedigend sein mag, jedoch in der Regel korrigierbar ist und zu keinen katastrophalen Folgen führt. Werden jedoch die vom Doppler-Radarsystem gelieferten Geschwindigkeitswerte vom Flugregelsystem zur Ausführung kritischer Flugmanöver, wie z. B. dem automatischen Übergang in den Schwebeflug bei Hubschraubern benötigt, so ist eine möglichst hohe Erkennungswahrscheinlichkeit des Auftretens falscher Geschwindigkeitswerte dringend notwendig, da sonst ein Absturz des Fluggeräts droht.

Der Erfindung liegt damit die Aufgabe zugrunde, ein Verfahren zur Erhöhung der Entdeckungswahrscheinlichkeit des Aufschaltens des Radarempfängers auf einen unerwünschten Nebenzipfel bei der Geschwindigkeitsmessung mittels Doppler-Radar in Fluggeräten anzugeben, die außerdem mit einem inertialen Lagereferenzsystem und Flugregelsystem sowie mit einem barometrischen Höhenmesser ausgerüstet sind.

Um dem beschriebenen Mangel zu begegnen, wird gemäß der Lehre des Patentanspruchs 1 mit vorteilhafter Ergänzung und Ausgestaltung gemäß weiteren abhängigen Patentansprüchen vorgeschlagen, die aus den individuellen Doppler-Frequenzwerten berechnete Vertikalgeschwindigkeit mit der aus der sogenannten baro-inertialen Regelschleife gewonnenen inertialen Vertikalgeschwindigkeit zu vergleichen. Dieser Vergleich führt in jedem Fall zur sicheren Erkennung des Auftretens falscher Geschwindigkeitswerte aus dem Doppler-Radarsystem.

Der besondere Vorteil der Erfindung liegt darin, daß die beträchtliche Verbesserung der Fehlererkennungsmöglichkeit ohne oder nur mit sehr geringem zusätzlichem technischem Aufwand erreicht wird. Unabhängig von der Beschaffenheit der überflogenen Erdoberfläche wird durch die Erfindung mit Sicherheit immer die richtige Vertikalgeschwindigkeit ermittelt, woraus gleichzeitig auch auf die Zuverlässigkeit der über das Doppler-Radarsystem berechneten übrigen Geschwindigkeitskomponenten geschlossen werden kann.

Die Erfindung und vorteilhafte Einzelheiten werden nachfolgend unter Bezug auf die Zeichnung in beispielsweiser Ausführungsform näher erläutert. Es zeigen:
- Fig. 1: ein Anschauungsbeispiel für die Strahlengeometrie bei einem Doppler-Radarsystem in einem Fluggerät und
- Fig. 2: ein Blockschaltbild zur Erläuterung des erfindungsgemäßen Fehlererkennungsverfahrens.

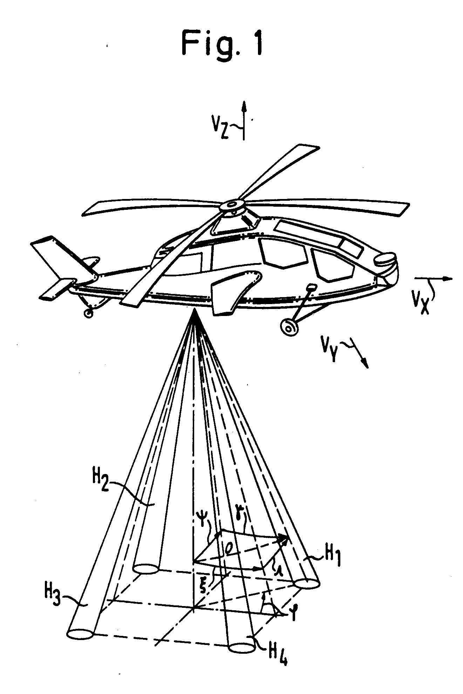

Aus der Fig. 1 ist die Strahlengeometrie für ein Doppler-Radarsystem mit vier Strahlungskeulen H₁ bis H₄ erkennbar, die von einem entsprechenden Antennensystem an der Unterseite eines Fluggeräts, in diesem Fall eines Hubschraubers, abgestrahlt werden. Die angegebenen und jeweils gemessenen Winkel sind nur der Vollständigkeit halber eingetragen, interessieren jedoch im vorliegenden Zusammenhang nicht. Die Geschwindigkeitskomponenten in horizontaler, lateraler und vertikaler Richtung des Fluggeräts sind mit V_{X}, V_{Y} und V_{Z} angedeutet. Da nur innerhalb des von den Hauptstrahlungskeulen H₁ bis H₄ umgrenzten Raums Nebenkeulen auftreten, ist die unbeabsichtigt über eine Nebenkeule gemessene Doppler-Frequenz nicht nur wegen des veränderten Einfallwinkels, sondern auch wegen der für diese Nebenkeule falschen Kalibration fehlerhaft und führt zu einer falschen Geschwindigkeitsberechnung.

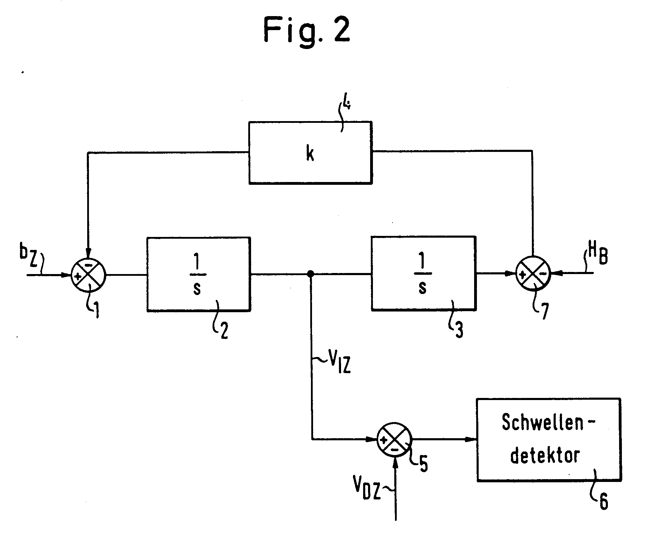

Wie aus dem Blockschaltbild der Fig. 2 ersichtlich ist, wird zur Verwirklichung des erfindungsgemäßen Verfahrens zunächst ein Integrator 2 benötigt, an dessen Eingang das Ausgangssignal b_{Z} eines Vertikalbeschleunigungsmessers zugeführt wird. Die am Ausgang des Integrators 2 erscheinende inertiale Vertikalgeschwindigkeitskomponente V_{IZ} beaufschlagt den einen Eingang eines Vergleichers 5, an dessen anderem Eingang die vom Doppler-Radarsystem gelieferte vertikale Geschwindigkeitskomponente V_{DZ} zugeführt wird. Das ausgangsseitige Vergleichssignal beaufschlagt einen Schwellendetektor 6, der ein einen Geschwindigkeitsfehler signalisierendes Signal abgibt, sobald eine voreinstellbare Grenze einer zulässigen Abweichung der beiden auf unterschiedlichen Wegen ermittelten Geschwindigkeitskomponenten auftritt. Die Zuverlässigkeit und Stabilität des Vergleichsergebnisses wird dadurch verbessert, daß die inertiale Vertikalgeschwindigkeit über eine baro-inertiale Schleife ständig überwacht und korrigiert wird. Zu diesem Zweck wird die Komponente V_{IZ} der inertialen Geschwindigkeit in einem zweiten Integrator 3 nochmals integriert und beaufschlagt damit einen Eingang eines weiteren Vergleichers 7, dem an einem anderen Eingang der Wert der barometrischen Höhe H_{B} zugeführt wird. Über eine Rückführung 4 gelangt ein aus dem Differenzsignal ermittelter Korrekturwert auf eine Additions- bzw. Subtraktionsschaltung 1, die außerdem durch das Ausgangssignal b_{Z} des Beschleunigungsmessers beaufschlagt ist.

Ergibt der Vergleich der beiden aus unterschiedlichen Quellen bestimmten Vertikalgeschwindigkeiten V_{IZ} bzw. V_{DZ}, daß die vom Doppler-Radarsystem gelieferten Werte der Vertikalgeschwindigkeit unbrauchbar sind, so müssen diese substituiert werden. Selbstverständlich sind in diesem Fall auch die longitudinale und die laterale Komponente falsch. Die Substitution der vertikalen Geschwindigkeitskomponente erfolgt dann durch die inertiale Vertikalgeschwindigkeitskomponente und die horizontalen Komponenten lassen sich beispielsweise für den kurzen erforderlichen Zeitraum aus dem letzten berechneten Wind und den Fahrtkomponenten bestimmen.

## Patentansprüche

1. Verfahren zur Erkennung von Fehlern bei der Geschwindigkeitsmessung von Fluggeräten mittels Doppler-Radar, die mit einem inertialen Lagereferenz- und Flugregelsystem sowie mit einem barometrischen Höhenmesser ausgerüstet sind, bei welchem Verfahren durch ein Antennensystem am Fluggerät eine Mehrzahl, jedoch mindestens drei gebündelte Radarstrahlen in festgelegten Raumwinkeln gegen die Erdoberfläche gerichtet und aus der um Doppler-Frequenzen verschobenen gemessenen Energierückstreuung der einzelnen Hauptstrahlungskeulen (H₁ bis H₄) der Mehrzahl von Radarstrahlen durch Summenbildung der skalierten Doppler-Frequenzwerte die Geschwindigkeitskomponenten (V_{X}, V_{Y}, V_{Z}) in drei Raumrichtungen bestimmt werden, von denen eine die Vertikalgeschwindigkeit ist, **dadurch gekennzeichnet,** daß zur Erhöhung der Entdeckungswahrscheinlichkeit des Aufschaltens des Radarempfangsystems auf rückgestreute Energie von Nebenzipfeln der gebündelten Radarstrahlen die über eine Baro-Inertiale-Regelschleife gewonnene inertiale Vertikalgeschwindigkeitskomponente (V_{IZ}) gegen die aus den Doppler-Frequenzen bestimmte Vertikalgeschwindigkeitskomponente (V_{DZ}) verglichen und aus dem Vergleich ein Fehlererkennungssignal abgeleitet wird.

2. Verfahren nach Anspruch 1, **dadurch gekennzeichnet,** daß zur Gewinnung der inertialen Vertikalgeschwindigkeitskomponente (V_{IZ}) das Signal (b_{Z}) eines Vertikalbeschleunigungsmessers integriert und das integrierte Signal (V_{Z}) einem Eingang eines Vergleichers (5) zugeführt wird, dessen anderer Eingang mit der Vertikalgeschwindigkeitskomponente (V_{DZ}) des Doppler-Radargeschwindigkeitsmessers beaufschlagt wird und daß ein einen vorgebbaren Schwellenwert übersteigender Ausgangswert des Vergleichers (5) als Fehler gewertet wird.

3. Verfahren nach Anspruch 2, **dadurch gekennzeichnet**, daß die inertiale Vertikalbeschleunigungskomponente (V_{IZ}) zweimal integriert und dieser doppelt integrierte Wert mit dem barometrischen Höhenwert (H_{B}) verglichen wird, und daß der aus dem Vergleich ermittelte Höhendifferenzwert als umgesetzter Korrekturwert (k) auf den Ausgang des Vertikalbeschleunigungsmessers rückgeführt wird.

## Claims

1. Method for detecting errors in the velocity measurement of aircraft by means of Doppler radar which are equipped with an inertial position reference and flight control system and with a barometric altimeter, in which method a plurality, but at least three focused radar beams are directed at predetermined solid angles towards the earth's surface by means of an antenna system on the aircraft and from the measured energy backscatter, displaced by Doppler frequencies, of the individual main radiation lobes (H₁ to H₄) of the plurality of radar beams the velocity components (V_{X}, V_{Y}, Y_{Z}), one of which is the vertical velocity, are determined in the three spatial directions by forming the sum of the scaled Doppler frequency values, characterised in that, in order to increase the probability of discovery of the radar receiving system being locked to backscattered energy from side lobes of the focused radar beams, the inertial vertical velocity component (V_{IZ}) obtained via a baroinertial control loop is compared with the vertical velocity component (V_{DZ}) determined from the Doppler frequencies and from the comparison an error detection signal is derived.

2. Method according to Claim 1, characterised in that, in order to obtain the inertial vertical velocity component (V_{IZ}), the signal (b_{Z}) of a vertical accelerometer is integrated and the integrated signal (V_{Z}) is supplied to one input of a comparator (5) to the other input of which the vertical velocity component (V_{DZ}) of the Doppler radar velocity meter is applied and in that an output value of the comparator (5) exceeding a predeterminable threshold value is evaluated as an error.

3. Method according to Claim 2, characterised in that the inertial vertical acceleration component (V_{IZ}) is integrated twice and this twice-integrated value is compared with the barometric altitude value (H_{B}), and in that the altitude difference value determined from the comparison is fed back as converted correction value (k) to the output of the vertical accelerometer.

## Revendications

1. Procédé pour la détection d'erreurs de mesure de vitesse d'aéronefs effectuée par radar Doppler, lesdits aéronefs étant équipés d'un système inertiel de référence de position et de contrôle de vol ainsi que d'un altimètre barométrique, selon lequel une pluralité, mais au moins trois, de faisceaux radar sont dirigés sous des angles solides définis vers la surface terrestre par un système d'antennes monté sur l'aéronef, et selon lequel les composantes de vitesse (V_{X}, V_{Y}, V_{Z}) dont l'une est la vitesse verticale, sont déterminées à partir de la rétrodiffusion de l'énergie mesurée des différents lobes principaux (H₁ à H₄) de la pluralité des faisceaux radar, décalée des fréquences Doppler, par la sommation des valeurs cadrées des fréquences Doppler, caractérisé en ce que pour augmenter la probabilité de la détection du verrouillage du système de réception radar sur l'énergie rétrodiffusée de lobes secondaires des faisceaux radar, la composante de vitesse verticale inertielle (V_{IZ}) obtenue par l'intermédiaire d'une boucle de régulation baroinertielle est comparée avec la composante de vitesse verticale (V_{DZ}) déterminée à partir des fréquences Doppler et qu'un signal de détection d'erreurs est dérivé de la comparaison.

2. Procédé selon la revendication 1, caractérisé en ce que, pour l'acquisition de la composante de vitesse verticale inertielle (V_{IZ}), le signal (b_{Z}) d'un accéléromètre vertical est intégré, que le signal intégré (V_{Z}) est transmis à l'entrée d'un comparateur (5) dont l'autre entrée reçoit la composante de vitesse verticale (V_{DZ}) du tachymètre à radar Doppler, et qu'une valeur de sortie du comparateur (5) dépassant une valeur de seuil prédéterminable est considérée comme erreur.

3. Procédé selon la revendication 2, caractérisé en ce que la composante d'accélération verticale inertielle (V_{IZ}) est intégrée deux fois, que cette valeur deux fois intégrée est comparée avec la valeur altimétrique barométrique (H_{B}), et que la valeur de différence altimétrique déterminée à partir de la comparaison est renvoyée comme valeur de correction transformée (k) à la sortie de l'accéléromètre vertical.
